# EUROPEAN PATENT APPLICATION

(11) **EP 4 851 012 A1**
(43) Date of publication of application: **09.12.2026**
(21) Application number: 26179982.9
(22) Date of filing: 20.05.2026
(51) Int. Cl.: B61L 23/04, B61L 27/53, G06V 20/56

(54) **METHOD FOR DETECTING RELEVANT EVENTS ALONG A RAILWAY LINE**

(30) Priority: 21.05.2025 IT 202500011575
(71) Applicant: Rete Ferroviaria Italiana S.p.A., 00161 Roma (IT)
(72) Inventor: STRINO, Andrea, 00161 Roma (IT); PLANO, Marco, 00161 Roma (IT); GONNELLI, Mirco, 00161 Roma (IT); TRIPICCHIO, Paolo, 00161 Roma (IT); SATLER, Massimo, 00161 Roma (IT)
(74) Representative: Bruni, Alessandro

(57) **Abstract**

A computer-implemented method for detecting a significant event along a track (1), such as the presence of an obstacle, comprises the phases of acquiring data relating to a morphology of the track (1), processing the data to detect the conformation of a first rail (2) and a second rail (3) comprised in said track (1) and the position of a horizon line (4) towards which the track (1) tends, defining track centre points, defining a track detection map to be superimposed onto a graphic elaboration of the track (1), wherein the track detection map identifies a zone with respect to which to detect the occurrence of a significant event and is operatively connected to the track centre points in order to allow the conformation and position of the track detection map to be modified, so as to adapt it to the actual conformation of the track (1).

## Description

### FIELD OF THE INVENTION

The present invention relates to a computer-implemented method for the analysis and processing of data acquired by means of sensors and/or acquisition devices, in order to detect the occurrence of a significant event in the vicinity of a track, along a direction of travel of a railway vehicle.

In particular, among the significant events that may occur, there is the presence of an obstacle along a track or in close proximity to the track itself.

### PRIOR ART

In the railway field, line maintenance operations must be carried out on a regular basis. Such interventions may range from simple routine maintenance operations to more complex works requiring the setting up of a railway construction site.

In both circumstances, such operations involve the use of machinery, tools, trains and materials of various types, which may be placed on the tracks or in their immediate vicinity during the execution of the works.

At the end of the maintenance activities, it is necessary to remove all the equipment and materials used, in order to restore normal train circulation on the affected section.

The failure to remove such elements may constitute an obstacle to railway transit, with the risk of damage to the trains and, in the most serious cases, of accidents with potential danger to persons.

Therefore, before reactivating railway circulation, it is extremely important to verify the absence of any obstacle that could compromise the safe transit of trains. Currently, such verification is often carried out manually by operators, who may make errors in identifying any impediments.

In order to verify that the railway line is clear of obstacles, in some cases a railway vehicle driven by a qualified operator is used. This vehicle travels the affected section at low speed, allowing the operator to visually inspect the line and ensure that there are no impediments along the route.

However, this procedure presents certain critical issues. In addition to being particularly slow, it depends largely on the accuracy of the operator's visual inspection, introducing a potential margin of human error that may compromise the reliability of the verification.

To overcome these limitations, the use of autonomous or supervised vehicles specifically designed for the inspection of railway sections is known in the sector. These vehicles feature a frame to which various functional components are operatively connected, including motors, wheels, control systems and a series of sensors for the acquisition and analysis of data during inspection operations.

Among the sensors commonly used to detect obstacles along the track, radar sensors are included, which allow the detection of obstacles even in adverse environmental conditions.

However, the effectiveness of such sensors may be compromised by the complexity of the railway environment, generating false positives. In particular, the radar may erroneously identify as obstacles fixed structures located in the vicinity of the tracks, such as signalling poles or other infrastructural elements, causing the activation of unnecessary alarm signals.

The presence of false positives represents a significant problem since it leads to frequent unnecessary slowdowns or stops of autonomous vehicles, compromising the efficiency of the inspection process. Furthermore, in many situations, the intervention of an operator is required to confirm the presence or absence of an actual obstacle, resulting in an increase in the time needed to complete the analysis of the railway section.

There is therefore a need for a more advanced and effective methodology for the analysis of a railway section, in particular of a track, in order to ensure accurate identification of obstacles. A more precise analysis system should be able to distinguish between objects that represent an actual impediment to transit and those that, although detected by the sensors, do not constitute a hazard to railway circulation.

The implementation of an innovative solution in this field would make it possible to increase the level of safety of the railway line, ensuring safe transit for trains, as well as to optimise inspection times, reducing any interruptions to railway traffic and improving the operational efficiency of the entire network monitoring system.

### OBJECTS OF THE INVENTION

The object of the present invention is to allow the automated recognition of a significant event along a track or in its vicinity, such as, for example, the presence of an obstacle.

A further object of the invention is to ensure the reliable detection of a significant event along the track, regardless of the presence of curves, straight sections or gradients along the route.

Another object of the present invention is to optimise the use of the computational resources required for the analysis and recognition of a significant event along a track, improving the operational efficiency of the system.

Another aspect of the present invention is to reduce the phenomenon of detecting so-called "false positives", which characterises traditional solutions. A false positive, in fact, corresponds to an erroneous evaluation of the acquired data as a result of which the occurrence of a significant event is reported, for example the presence of an obstacle, when, in reality, the same is not present or, if a foreign body is present, the same does not interfere with transit along the track and thus does not correspond to a significant event.

The proposed method ensures a high degree of reliability in detection, improving safety and reducing the time required for analysis and verification along a track.

These and other objects are achieved by a computer-implemented method for the detection of a significant event along a track or in the vicinity thereof according to claim 1. The dependent claims specify further advantages of the computer-implemented method according to the invention.

The advantages offered by the computer-implemented method according to the invention are evident.

The computer-implemented method according to the invention makes it possible to process the data acquired from at least one sensor and/or one image acquisition device, in order to generate a dynamic track detection map that helps to identify the occurrence of a significant event along a track or in its immediate vicinity, which could represent a hazard to circulation along such track. As stated, a significant event is the presence of an obstacle along the track or in the vicinity of the track itself. In particular, the obstacle may be fixed or moving relative to the track or in the vicinity thereof.

Furthermore, the method makes it possible to filter out data that, in traditional solutions, would be considered false positives, thus improving the efficiency of the analysis of the acquired environmental data.

The described method provides for several phases to analyse the route and identify potential hazards. A first phase concerns the acquisition of data by means of at least one sensor, which collects information on the track configuration, the position of the horizon and the depth of the field of view. Subsequently, these data are processed to determine the conformation of the track and to define a track detection map that identifies the area to be monitored, within which to verify whether a significant event occurs.

To improve the accuracy of detection, the track detection map is divided into several interconnected sections, with dimensions that vary according to the position along the route. Thanks to a dynamic deformation system, the map adapts to the conformation of the track as well as to variations in a horizon line, allowing precise monitoring that adheres to reality, even in complex situations, in the presence of curves or gradients.

### DESCRIPTION OF THE FIGURES

The present invention will now be described, by way of illustration but not limitation, according to its preferred embodiments, with particular reference to the Figures of the attached drawings, in which:
Figure 1 shows a detailed view of a graphic processing of acquired data relating to a track;
Figure 2 shows a detailed view of the graphic processing referred to in Figure 1, to which information has been applied by means of the method according to the invention;
Figures 3 and 4 show a schematic view of a track detection map according to the invention, in non-deformed configuration (Figure 3) and in deformed configuration (Figure 4);
Figure 5 is a view of a processing of the data acquired by means of the method according to the invention;
Figure 6 is a view of a further processing of the data acquired by means of the method according to the invention, including a track detection map referred to in Figure 3 or 4.

### DESCRIPTION OF THE INVENTION

In the following description, reference will be made to a computer-implemented method for analysing and detecting the occurrence of at least one significant event along the direction of travel of a vehicle on a track 1.

In particular, the computer-implemented method according to the invention, hereinafter referred to as the method for brevity, makes it possible to perform an adaptive analysis of a frontal section with respect to at least one sensor and/or at least one acquisition device, on board a railway vehicle, along a direction of travel.

In the following description, reference will be made to a significant event such as the detection of an obstacle along the track 1 or in the vicinity of the track 1, which may constitute an obstacle to normal circulation along the track 1.

The term "track" is intended to indicate a railway path delimited between a first rail 2 and a second rail 3, parallel to each other.

The term "obstacle", on the other hand, refers to an object that has a predetermined minimum dimension. Preferably, the dimension is a height dimension understood as the dimension extending between a bottom portion and a top portion of the object. By way of example, a minimum height of an object to be considered as an obstacle may be defined as a dimension greater than the height of a railhead of the first rail 2 or of the second rail 3 with respect to their lying plane or sole.

As regards the at least one sensor and/or the at least one data acquisition device, generic reference will be made to sensors or acquisition devices capable of detecting morphological data of a surrounding environment, including data relating to depth of field.

By way of example but not limitation, a preferred embodiment of the method provides for the use of LiDAR sensors, in order to generate, in addition to a 3D point cloud, an intensity image of the returning light signal, useful for highlighting the presence of reflective metallic objects, such as rails. Together with the LiDARs, IMU (Inertial Measurement Unit) sensors may be used to stabilise and correct any distortions in the LiDAR data, in order to ensure a more accurate survey.

It is understood that alternative embodiments of the method according to the invention are possible, in which, in place of the LiDAR sensors, image acquisition devices capable of acquiring depth of field data are used, for example by means of stereoscopic image acquisition.

In the following description, therefore, the term "at least one sensor" or "at least one data acquisition device" will refer generically to any device capable of detecting environmental data by means of which to determine the morphology of a track, of an environment surrounding the same, and adapted to derive depth of field data.

The at least one sensor or the at least one data acquisition device may be mounted on an unmanned, autonomous vehicle configured to travel along a track, in order to perform an analysis of a railway section, implementing the method according to the invention. It is understood that the at least one sensor and/or the at least one data acquisition device may equally be installed on another type of railway vehicle, possibly manned, while still within the scope of implementation of the method according to the present invention.

Hereinafter, therefore, the term "railway vehicle" refers indiscriminately to both an unmanned autonomous railway vehicle and a manned railway vehicle, without any limitation.

The phase of installation and calibration of the at least one sensor and/or the at least one data acquisition device on board the railway vehicle does not form the specific subject matter of the present invention and will therefore not be described further.

The method according to the invention comprises an initial phase of acquiring environmental data relating to the morphology of a track 1, along a direction of travel.

The acquired data comprise information relating to a distance with respect to an acquisition point, in order to also define a depth of field along the direction of travel and, therefore, a depth image. A depth image is a preferably monochromatic image in which the colour tone of a single pixel is generated from the projection onto the image plane of a single point acquired by means of the sensors and represents a depth distance measured with respect to the acquisition point of the sensor.

The method comprises a subsequent phase of processing the environmental data in order to generate a graphic reconstruction of the morphology of the track 1 within a spatial domain and to identify the position of the horizon line 4.

With reference to a possible embodiment of the computer-implemented method according to the invention, the spatial domain may be two-dimensional and correspond to an image plane. The expression "image plane" is intended to indicate a geometric plane containing an image of the track 1 according to a frontal perspective perpendicular to the visual axis, in which the image is in turn generated as a frontal region of a depth image.

With reference to an alternative embodiment, the spatial domain may be three-dimensional.

In the following description, reference will be made to a two-dimensional spatial domain, it being understood that the method according to the invention may equally find application in a graphic reconstruction of the morphology of the track 1 within a three-dimensional domain.

The environmental data acquired by means of the at least one sensor are processed in order to obtain a schematic representation of the position and conformation of a first rail 2 and a second rail 3 included in the track 1 along the direction of travel.

For example, the first rail 2 and the second rail 3 may have a linear or curved profile along the direction of travel. Consequently, the schematic representation of the first rail 2 and the second rail 3 is respectively linear or curved.

The method according to the invention makes it possible to identify and schematise the configuration of the track 1 at least in a distal region, in the vicinity of the horizon line 4, and in a proximal region, that is to say a region close to the at least one sensor.

In the following description, the expression "depth map" will refer to a processing of the data detected in correspondence with the proximal region relative to the at least one sensor, and the expression "track detection map" will refer to a processing of the data detected in correspondence with a region distal from the at least one sensor, subsequent to the proximal region with respect to the direction of advancement along the track 1.

According to one embodiment, the track detection map is positioned in correspondence with the horizon line 4, and is configured to identify any obstacles along the track 1 in the vicinity of the horizon line 4 itself.

According to an alternative embodiment, the track detection map may be positioned differently, within a region of space comprised between the horizon line 4 and the at least one sensor and/or acquisition device. The depth map and the track detection map are arranged in succession with respect to each other along the direction of advancement.

In other words, proceeding along the direction of advancement, the depth map will be encountered first, followed by the track detection map. The extension of the depth map along the direction of advancement, understood as distance with respect to the at least one sensor along the direction of advancement, is established a priori. It follows that the distance of the track detection map with respect to the at least one sensor is likewise established a priori.

As stated, by means of the processing of the data it is possible to identify and graphically reconstruct the position of the horizon line 4 with respect to the first rail 2 and the second rail 3.

It is highlighted, in fact, that the position and/or inclination of the horizon line 4 may vary relative to the observation point from which the at least one sensor and/or the at least one data acquisition device perform the acquisition. By way of example, the position of the horizon line 4 may vary due to the gradient of the track 1. Indeed, if the railway vehicle travels a section of track 1 uphill or downhill, the horizon line 4 will appear to shift respectively downwards or upwards relative to the data acquisition point. Furthermore, the possible presence of irregularities, such as undulations or discontinuities (rail joints, ground subsidence, etc.), could cause oscillations in the at least one sensor, causing an apparent variation in the position of the horizon line 4. Furthermore, the presence of a curved section with inclination of the track 1, that is to say a section in which the track 1 is laterally inclined with superelevation of the outer rail at a curved section, may change the apparent position of the horizon line 4 as a function of the angle of inclination.

The method according to the invention comprises a phase of definition, on the basis of the processed data, to define the depth map and the track detection map. These delimit respective detection areas by means of which to detect the occurrence of a significant event along the direction of travel, inside the track 1 and/or outside the same.

The depth map and the track detection map are graphic elaborations of the data detected by the at least one sensor, which are superimposed onto the graphic reconstruction of the morphology of the track 1, in order to allow the detection of any obstacles along the direction of travel.

With reference to the track detection map, this is a portion of an image or of a series of data comprising an organised structure of spatial information.

The features of the method according to the invention by means of which to define the features of the track detection map will be described below, given that those relating to the depth map do not form the specific subject matter of the invention.

The track detection map is dynamic, in the sense that it is deformable as a function of the graphic reconstruction of the track 1, in order to follow its morphology. The track detection map is, in fact, deformable in order to be adapted to the actual morphology of the track 1, in order to allow the identification of the occurrence of significant events relative to the travel of the vehicle along the track 1 itself, in particular in the vicinity of the horizon.

Furthermore, the position of the track detection map may be translated along a horizontal direction and/or a vertical direction in order to align it with the actual conformation of the track 1 and the positioning of the horizon line 4, conferring a high degree of flexibility of use of the method, understood as the ability to be used with any configuration of the track 1.

The track detection map comprises at least one area situated between the first rail 2 and the second rail 3. Such area may be located entirely within the space delimited between the first rail 2 and the second rail 3, or may extend so as to include also the first rail 2 and the second rail 3. Furthermore, according to a further alternative, the track detection map may comprise both the space between the first rail 2 and the second rail 3 and an area external to them, extending laterally to allow the evaluation of a region that includes simultaneously the interior and the exterior of the first rail 2 and the second rail 3, depending on specific requirements of use.

The method according to the invention provides for dividing the track detection map into a plurality of sections 5, which are stacked mutually one on top of the other along the direction of travel.

The term "section" is intended to indicate indiscriminately an elongated or substantially elongated region delimiting an area, as well as a linear section that substantially corresponds to a line.

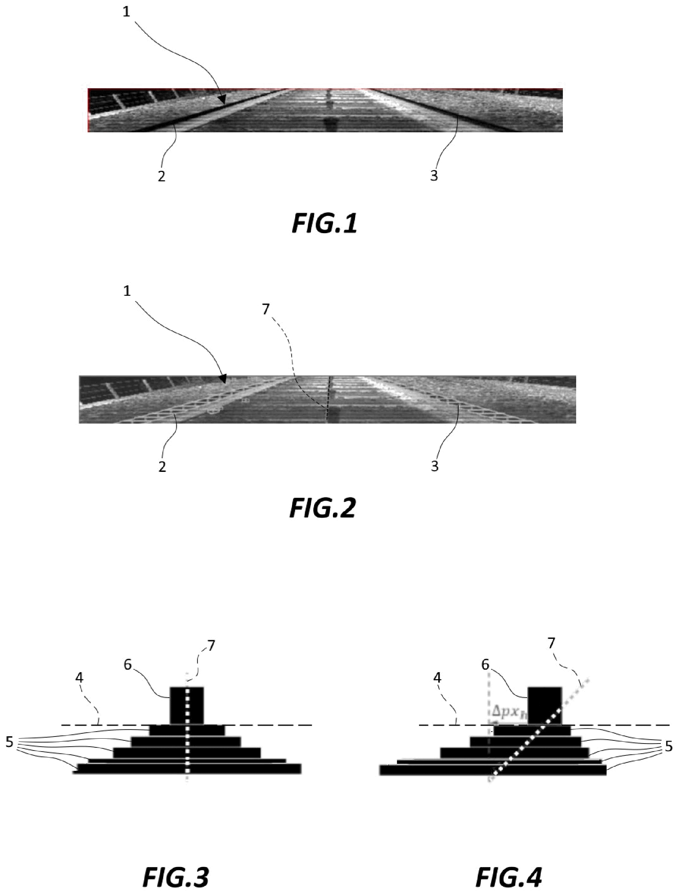

With reference to what is illustrated by way of example in the attached Figures, see Figures 3, 4 and 6, each of the sections 5 is schematised as a region with a rectangular conformation. In particular, each of the sections 5 extends along a horizontal direction and a vertical direction, which are orthogonal to each other.

It is understood that according to an alternative embodiment, not illustrated in the attached Figures, the sections 5 may have a substantially rectangular or trapezoidal shape or, more generally, an elongated shape whose edges may be curved or jagged depending on the data detected by the at least one sensor.

In the attached Figure 3, a simplified configuration of a track detection map by means of which the distal portion of the track 1 is monitored is shown, by way of example but not limitation.

The track detection map comprises a plurality of sections 5 stacked in succession with one another and a top section 6, which is positioned at the top of the remaining sections 5.

In particular, the sections 5 have variable width, where the term "width" indicates a dimension oriented along the horizontal direction, that is to say along a direction transverse with respect to the direction of travel along the track 1.

The width of the sections 5 depends on the convergence of the first rail 2 and the second rail 3 in the vicinity of the horizon line 4, due to a perspective effect.

Due to perspective or, more generally, optical distortion phenomena in the vicinity of the horizon line 4, in fact, the first rail 2 and the second rail 3 with respect to the at least one sensor appear closer to each other, although in reality they are always placed at the same distance. For this reason, the individual sections 5 comprised in the track detection map have decreasing dimensions along the horizontal direction as they approach the horizon line 4. In other words, the individual sections 5 may have a decreasing extension at least along the horizontal direction, starting from a region distal with respect to the horizon line 4 and approaching towards a region proximal to the horizon line 4 itself. Consequently, according to one embodiment of the method, the track detection map may overall have a conformation assimilable to a trapezoid or substantially similar to a trapezoid.

It is understood that according to alternative embodiments with respect to what is shown in the attached Figures, the track detection map has a conformation different from a trapezoid. For example, alternative embodiments of the method according to the invention are possible, in which the track detection map extends externally with respect to the first rail 2 and the second rail 3, thus having an overall irregular conformation, different from a trapezoid.

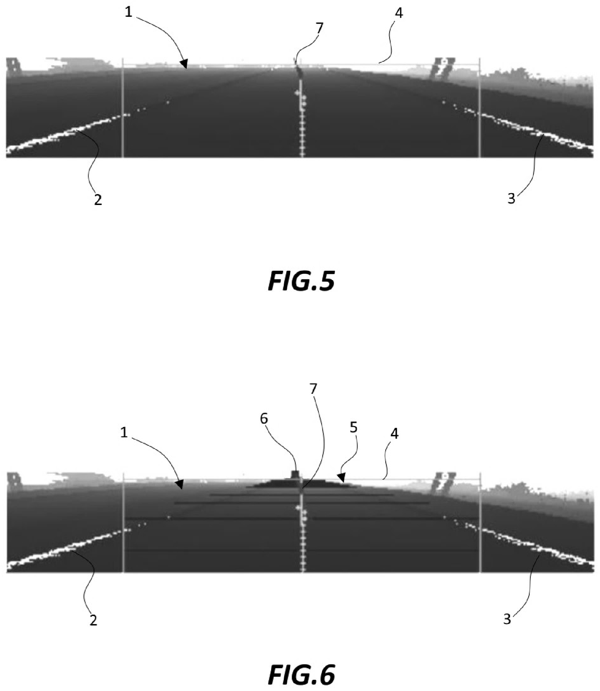

It is highlighted that the individual sections 5 may have a different height from one another, understood as the dimension that develops along the direction of travel (see, for example, Figure 5).

By way of example, the overall number and configuration of the individual sections 5 comprised in the track detection map are variable depending on the precision and the computational power available. The greater their number, the greater the power required. In this way it is possible to adapt the precision and the information analysed by the method according to the invention depending on specific requirements of use (conformation of the track 1, speed of travel, available computational power, etc.).

The top section 6 has an extension along the vertical direction, that is to say along a direction aligned or substantially aligned with the direction of travel, which is greater than that of each of the remaining sections 5.

Furthermore, the top section 6 has an extension along the horizontal direction that is less than that of each of the sections 5.

The method according to the invention provides for positioning the track detection map in such a way that the top section 6 is placed above the horizon line 4 (see Figure 5). In other words, the top section 6 is placed above the horizon line 4 and makes it possible to identify any obstacles in the vicinity of the horizon that project at least partially inside the track 1 or in its immediate vicinity. This highlights the importance of being able to correctly determine the position of the top section 6 in the track detection map.

The sections 5 and the top section 6 make it possible to effectively identify objects that in traditional solutions would be considered obstacles but which in reality may be false positives because they are located outside and far from the track 1.

The method according to the invention provides for the deformation, in a dynamic manner, of the track detection map as a function of the acquired data relating to the conformation of the track 1 and the position of the horizon line 4 relative to the track 1 itself.

In practice, being able to adapt the conformation of the track detection map to the morphology of the track 1, it is possible to effectively detect the presence of any obstacles with respect to a predetermined area. In this regard, the method according to the invention comprises a phase of processing the conformation of the track 1 and the position of the horizon line 4.

It is specified that the term "position" referred to the horizon line 4 is intended to indicate, in a generic manner, the positioning of the horizon line 4 relative to the track 1 as well as its inclination with respect to a horizontal direction. As previously described, the horizon line 4, in addition to being able to shift closer to or further from the data acquisition point, depending on the presence of dips, ascents, descents, etc., may vary its inclination in the vicinity of curved sections of the track 1.

As stated, the track detection map may be deformed. Such deformation occurs in an organised manner according to a predefined logic. In particular, the individual sections 5 and the top section 6 are operatively connected to at least one reference element which, in turn, is defined on the basis of the conformation of the track 1 detected by means of the at least one acquisition device.

Once the positioning of the at least one reference element has been determined, the position and conformation of the track detection map are determined.

As will be better described below, the reference element is processed on the basis of the data acquired by the at least one sensor relating to the conformation of the track 1.

In accordance with one embodiment of the method according to the invention, the environmental data acquired by the at least one sensor are processed by means of computer vision techniques.

These make it possible to recognise the morphology of the frontal environment with respect to the at least one acquisition device along the direction of travel and therefore to determine the position of the at least one reference element.

Furthermore, by means of computer vision techniques it is possible to extrapolate the outline of the first rail 2 and the second rail 3, as well as to identify the horizon line 4 or further reference elements relative to the track 1.

For example, determining the morphology of the track 1, with particular reference to the position and conformation of the first rail 2 and the second rail 3, makes it possible to establish the horizontal width of the various sections 5 and of the top section 6, depending on specific requirements previously described (track detection map comprised within the space delimited between the first rail 2 and the second rail 3, or including also the first rail 2 and the second rail 3, or extending also outside the first rail 2 and the second rail 3).

According to a preferred embodiment of the method that is the subject of the invention, the at least one reference element corresponds to a track centre point.

The expression "track centre point" is intended to indicate a median distance comprised between the first rail 2 and the second rail 3 along the horizontal direction.

The track centre points are determined from the graphic elaboration of the first rail 2 and the second rail 3. In general, such track centre points are offset from one another along the direction of travel. The track centre points are organised in a list as a function of a respective distance along the direction of travel, with respect to the data acquisition point.

The number of calculated track centre points may vary depending on the computational power and/or the resolution in the acquisition of the available environmental data, the quantity of data to be processed and the precision sought. Obviously, the greater the number of track centres to be calculated, the greater the computational power required by the system.

In particular, the track centre points may be calculated in the space comprised between the at least one acquisition device and the horizon line 4, along the direction of advancement. It is understood that, depending on specific requirements, the calculation of the track centre points may be performed along at least a portion of such space.

For example, given that the track detection map is configured to detect a significant event in the vicinity of the horizon line 4, the method according to the invention comprises a phase of calculating the track centre points at least in the vicinity of the horizon line 4, in order to allow the conformation of the track 1 to be defined.

The track centre points thus determined are operatively connected to each other by means of at least one interpolation line 7 (see, for example, Figures 5 and 6).

By way of example, according to one embodiment, the interpolation is performed using linear straight lines. In this way, it is possible to optimise the required computational power. However, alternative embodiments may be considered, in which the interpolation is performed by means of more complex functions, such as splines, higher-order polynomials or other non-linear functions, in order to achieve greater accuracy at the cost of greater computational expense. According to one embodiment, the at least one interpolation line 7 is calculated in terms of inclination as a moving average between interpolations performed on lists of consecutive track centres in temporal terms, with respect to consecutive frames, i.e. consecutive graphic representations.

The number of interpolation lines 7 varies depending on the number of regions into which the acquired data are subdivided in a space comprised between the acquisition device and the horizon line 4. The subdivision occurs along the direction of advancement. In the case where more than one interpolation line 7 is used, these are operatively connected to each other in order to approximate the course of the track 1 as a function of its actual morphology.

The approximation with which the course of the track 1 is determined may be adjusted on a case-by-case basis to adapt to specific operational requirements, varying, for example, the numbers of reference elements considered or the type of interpolation used, thus balancing the accuracy of the reconstruction of the morphology of the track 1 with the available or to be used computational power.

By means of the at least one interpolation line it is possible to understand, in a practical and easy manner, the orientation of the track 1 with respect to a region of interest.

By way of example but not limitation, the at least one interpolation line 7 is calculated by means of an algorithm capable of processing data containing any anomalous data or measurement errors, also called "outlier" data. For example, an algorithm usable for this purpose is the so-called RANSAC algorithm.

The method according to the invention comprises a phase of calculating, for each of the sections 5, a respective median point, which defines a centre or substantially a geometric centre of each section.

The definition "median point" is intended to indicate a geometric centroid, a geometric equivalent of a centre of mass. By way of example, with reference to a section 5 having a rectangular conformation, the median point corresponds to the centre of the rectangle, that is to say the point at which the internal diagonals of the rectangle intersect.

Likewise, the method comprises a phase of calculating the median point for the top section 6.

The method that is the subject of the invention comprises a phase of operative connection between the track detection map and the at least one reference element, in order to adapt the position of the map and its conformation to the conformation of the track 1 as detected.

The method according to the invention comprises a phase of superimposing the track detection map onto the graphic elaboration of the track 1. The track detection map is operatively connected, in a dynamic manner, to the graphic elaboration of the track 1 in order to allow the conformation of the map itself to be varied, adapting it on a case-by-case basis to the actual conformation of the track 1.

In this regard, the method comprises a phase of operative connection between the median point of each of the sections 5 and of the top section 6 to the track centre points. More precisely, such connection phase comprises connecting the median point of each of the sections 5 and of the top section 6 to the at least one interpolation line 7.

As a result of such operative connection, following a variation in the curvature of the track 1 detected along the direction of travel, a variation in the reciprocal position of the individual reference elements is determined and, consequently, a variation in the position and/or inclination of the at least one interpolation line 7.

By way of example, the presence of a curved section of the track 1 in the vicinity of the horizon line 4 determines a progressive displacement of the track centre points in the vicinity of the horizon line 4 itself along a direction transverse with respect to the direction of travel along the track 1. It follows that the at least one interpolation line 7 varies its inclination and/or position with respect to the direction of travel.

Each median point of the sections 5 and of the top section 6, being operatively connected to the at least one interpolation line 7, follows its displacement, understood as translation and/or inclination with respect to the direction of travel.

By way of example, in the case where the at least one interpolation line 7 is of a linear type, a variation in the angle of inclination that the at least one interpolation line 7 assumes with respect to the direction of travel determines the deformation of the track detection map, understood as reciprocal displacement between the individual sections 5 and between these and the top section 6.

In the attached Figure 3, a track detection map in standard non-deformed configuration is shown schematically, by way of example, corresponding to a straight conformation of the track 1.

In practice, when the track detection map is in non-deformed configuration, the individual sections 5 and the top section 6 are aligned, with the respective median points aligned with each other along the direction of travel.

In the attached Figure 4, on the other hand, a possible deformation of the track detection map is shown schematically, corresponding to a curved course of the track 1 in the vicinity of the horizon line 4. As a result of the curvature of the track 1 in the vicinity of the horizon line 4, the track centre points have a course along the direction of travel such as to determine an inclination of the at least one interpolation line 7. It follows that the median points of the individual sections 5 and of the top section 6 shift consistently with the inclination of the at least one interpolation line 7, determining a translation of the sections 5 and of the top section 6 themselves.

The method according to the invention provides for a phase of checking the position of the track detection map with respect to the graphic reconstruction of the morphology of the track 1, in order to ensure that the track detection map is correctly positioned with respect to the morphology of the track 1, as detected.

The method according to the invention comprises a phase of horizontal translation of the track detection map in order to synchronise it with the most recent data relating to the graphic reconstruction of the track 1.

The phase of block horizontal translation of the track detection map provides for calculating the median point of a first bottom section 5 with respect to the horizontal position of a track centre point taken as a reference for such first bottom section 5.

The bottom section 5 corresponds to the section 5 closest to a bottom portion of the region in which the graphic reconstruction of the track 1 is subdivided. As previously described, in fact, the graphic reconstruction of the track 1 may be subdivided into several regions, in succession with one another along the direction of advancement along the track 1.

In the case where there is a horizontal misalignment between the track detection map and the graphic reconstruction of the track 1, that is to say between the position of the bottom section 5 and a respective portion of the at least one interpolation line 7 to which it is operatively connected, it is possible to correct in block the horizontal positioning of the entire track detection map itself, in order to align it with the actual conformation of the track 1.

Furthermore, where the track 1 has a curved course in the vicinity of the horizon line 4, the method, as described, provides for deforming the track detection map in order to adapt it to the actual conformation of the track 1 and, if necessary, translating it in block along the horizontal direction in order to allow the track detection map to correctly copy the graphic elaboration of the track 1 along the direction of travel.

The track detection map therefore has two horizontal translation components of the sections 5 and of the top section 6: a first component operatively connected to a rigid, block displacement of all the sections 5 and of the top section 6, and a second horizontal component due to the relative horizontal translation of the individual sections 5 and of the top section 6 as a result of a variation in position of the at least one interpolation line 7, to which they are operatively connected.

The method according to the invention provides for a phase of verifying the horizontal translation of the track detection map on the basis of a verification of the positioning of the at least one interpolation line 7 with respect to a first section 5, taken as a reference point. If the verification is positive, the translation is confirmed and the horizontal block positioning of the track detection map is updated. If not, the translation is interrupted in order to avoid errors.

At the end of this process, the track detection map is aligned with the most up-to-date data relating to the graphic reconstruction of the track 1.

In particular, in the case where the at least one sensor is a multi-layer (or multi-channel) LiDAR sensor, the control and correction phase would include performing a check as to whether the detected track 1 correctly aligns with a first channel of the LiDAR sensor. In the case where the at least one sensor identifies a valid channel, the translation would be confirmed and the coordinates of the maps updated accordingly. In the case where the channel is not valid, the translation would be interrupted in order to avoid errors.

The expression "first channel" refers to a lower laser beam emitted by a multi-layer (multi-channel) LiDAR sensor as well as to a virtual channel that is calculated with criteria different from the physical positioning of the laser. In other words, the "first channel" corresponds to a lower calculated horizontal coordinate among a range of horizontal coordinates closest to the horizon.

The first channel is used as a reference to verify that the track 1 has been detected in the correct position.

This verification makes it possible to avoid errors due to disturbances in the data, for example following anomalous reflections that could lead to an erroneous translation of the track detection map.

The comparison between the estimated position of the track 1 and the position detected by the at least one sensor ensures that the translation of the track detection map is accurate and consistent with the actual data.

According to an alternative embodiment, the at least one sensor for acquiring data on the environment comprises stereoscopic cameras. According to this version, the phase of processing the acquired data comprises the analysis of images provided by such stereoscopic cameras, in order to reconstruct a three-dimensional model of the track 1 along the direction of travel. It follows that the phase of horizontal translation of the track detection map is determined by comparing predetermined points of the track 1 between successive frames, calculating any average deviation and updating the track detection map accordingly.

The method according to the invention comprises a phase of aligning the track detection map along the vertical direction, in response to a displacement of the horizon line 4.

The phase of vertical translation of the track detection map provides for moving the entire map upwards or downwards on the basis of the position of the horizon line 4 as obtained from the graphic reconstruction of the data acquired by means of the at least one sensor, ensuring that the position of the track detection map is effectively aligned with the horizon line 4 along the direction of travel.

The vertical translation phase provides for acquiring the data relating to the conformation of the track 1 and, in particular, to the position of the horizon line 4.

By way of example, the calculation of the position of the horizon line 4 is determined by means of a moving average of the detected heights, reducing unwanted fluctuations due to the sensitivity of the at least one sensor or to momentary variations in the morphology of the track 1 (ascents, descents, irregularities, etc.).

The method according to the invention comprises a phase of detecting any obstacles inside or in the vicinity of the track detection map and of assigning a hazard index based on their position and distance of the object relative to the track detection map.

By way of example, the method provides for supplying specific values of the hazard index to distinguish whether a violation, understood as the presence of an obstacle along or in the vicinity of the track 1, occurs inside the track detection map or in its vicinity, and to establish specific actions to be imparted to the dynamics of the vehicle travelling along the track 1.

With reference to what has been described above, it is evident that the method for detecting any obstacles along a railway line according to the invention is capable of achieving the intended objects and of overcoming the drawbacks of traditional methods.

The method according to the invention, in fact, makes it possible to accurately acquire and process the actual morphology of the track 1, including also the data relating to the position of the horizon line 4. On the basis of such graphic elaboration it is possible to effectively determine the position and conformation of a track detection map by means of which to identify the occurrence of a significant event, such as, for example, the presence of an obstacle, in the vicinity of the track 1 or inside it.

In particular, the possibility of dynamically deforming the track detection map during advancement along the track 1 makes it possible to monitor, with sufficient advance, in a precise manner the possible presence of obstacles in the vicinity of the horizon line 4, that is to say in a zone distal with respect to the at least one acquisition sensor, regardless of the presence of curves or gradients.

Furthermore, the position of the entire track detection map may be translated along a horizontal direction and/or along a vertical direction, in order to effectively update the relative positioning of the track detection map with respect to the graphic reconstruction of the morphology of the track 1.

The method according to the invention, by making it possible to detect significant events in the vicinity of the horizon line 4 and to effectively distinguish them from events that, in traditional solutions, correspond to false positives, allows for effective control of the dynamics of a vehicle in transit along the track 1, improving the accuracy and optimisation of monitoring.

In the foregoing, some embodiments have been described and variants of the present invention have been suggested, but it is to be understood that persons skilled in the art may make modifications and changes without thereby departing from the relevant scope of protection, as defined by the appended claims.

## Claims

1. Computer-implemented method for detecting at least one significant event along a track (1), said method comprising the phases of:
- acquiring data by means of at least one sensor and/or at least one data acquisition device, relating to a morphology of said track (1) or of an environment in the vicinity of said track (1) along a direction of travel, wherein said data also comprise information relating to a distance with respect to an acquisition point of said data, in order to define a depth of field,
- processing said data in order to obtain a graphic reconstruction of said track (1) and to determine a position and/or orientation of a horizon line (4) towards which said track (1) tends;
- defining, on the basis of said data, a plurality of track centres representative of the conformation of said track (1);
- generating, on the basis of a graphic reconstruction of said processed data, a track detection map that in turn delimits a detection zone of interest close to said horizon line (4),
- superimposing said track detection map onto said graphic reconstruction of said track (1), positioning said track detection map in a position interposed between said horizon line and said at least one sensor and/or at least one data acquisition device;
- modifying the position and/or deformation of said track detection map as a function of the position of said track centres and of the position of said horizon line (4),
- detecting the presence of any significant event along said track (1) inside or in the vicinity of said track detection map.

2. Computer-implemented method according to claim 1, wherein said phase of defining said plurality of track centres comprises making a graphic reconstruction of a first rail (2) and a second rail (3) comprised in said track (1) on the basis of said data acquired by means of said at least one sensor and/or acquisition device, calculating a median distance between said first rail (2) and said second rail (3) along a horizontal direction with respect to said direction of advancement along said track (1), wherein said track centre points are in succession with one another along said direction of travel.

3. Computer-implemented method according to claim 2, wherein said defining said plurality of track centres comprises organising said track centre points in a list as a function of a respective distance along said direction of travel, relative to an acquisition point of said data.

4. Computer-implemented method according to claim 1, wherein said track detection map comprises a plurality of sections (5) and a top section (6) stacked in succession with one another along said direction of travel, wherein said top section (6) is positioned above said horizon line (4) and said plurality of sections (5) is positioned below said horizon line (4).

5. Computer-implemented method according to claim 4, wherein said top section (6) has an extension along said vertical direction greater than that of each of said sections (5) and an extension along said horizontal direction less than that of each of said sections (5).

6. Computer-implemented method according to claim 1, comprising a phase of interpolating said track centre points.

7. Computer-implemented method according to claim 5, wherein said phase of interpolating comprises the definition of at least one interpolation line (7) to operatively connect said track centre points to one another.

8. Computer-implemented method according to claim 6, comprising a phase of defining a median point for each of said sections (5) and for said top section (6), and of operatively connecting each median point to said interpolation of said track centre points.

9. Computer-implemented method according to claim 1, wherein said phase of modifying the position and/or the conformation of said track detection map provides for connecting each of said median points of said sections (5) and of said top section (6) to said at least one interpolation line (7) and modifying the position and/or inclination of said at least one interpolation line (7) on the basis of said graphic elaboration of said track (1), so as to cause a translation or a deformation of said detection map in accordance with a conformation of said track (1) reconstructed by means of said reference elements.

10. Computer-implemented method according to claim 1, comprising a phase of adjusting the position of said track detection map along a direction parallel to said direction of travel, in order to align the position of said top section (6) with respect to said horizon line (4).

11. Computer-implemented method according to claim 1, comprising a phase of block horizontal translation of said track detection map in order to synchronise it with the most recent data relating to the graphic reconstruction of the track (1), and a phase of verifying said horizontal translation on the basis of a positioning verification of said at least one interpolation line (7) with respect to a first section (5) taken as a reference point.

12. Computer-implemented method according to claim 1, comprising a phase of generating a hazard index as a function of the occurrence of a significant event, said significant event being capable of occurring inside said track detection map.
